# EUROPEAN PATENT APPLICATION

(11) **EP 2 698 856 A1**
(43) Date of publication of application: **19.02.2014**
(21) Application number: 12770613.3
(22) Date of filing: 11.04.2012
(51) Int. Cl.: H01M 10/0562, C01B 17/22, H01B 1/06, H01B 13/00, H01M 10/052

(54) **METHOD FOR PRODUCING LITHIUM SULFIDE FOR LITHIUM ION CELL SOLID ELECTROLYTE MATERIAL**

(30) Priority: 12.04.2011 JP 2011087953
(71) Applicant: Mitsui Mining & Smelting Co., Ltd, Shinagawa-ku Tokyo 141-8584 (JP)
(72) Inventor: MIYASHITA, Norihiko, Ageo-shi Saitama 362-0021 (JP)
(74) Representative: Gille Hrabal
(86) International application number: PCT/JP2012/059889
(87) International publication number: WO 2012/141207

(57) **Abstract**

Provided is a method for producing lithium sulfide based on a new dry method, by which lithium sulfide can be produced more easily at lower cost, and fine pulverization of lithium sulfide can be attempted. Suggested is a method for producing lithium sulfide (Li₂S) for a solid electrolyte material for lithium ion batteries that is used as a solid electrolyte material for lithium ion batteries, the method including bringing lithium carbonate powder into contact with a gas containing sulfur (S) in a dry state, simultaneously heating the lithium carbonate, and thereby obtaining lithium sulfide powder.

## Description

### TECHNICAL FIELD

The present invention relates to a method for producing lithium sulfide (Li₂S) that can be suitably used as a solid electrolyte of lithium ion batteries.

### BACKGROUND ART

A lithium ion battery is a secondary battery having a structure in which lithium dissolves out as ions from a cathode at the time of charging, moves to an anode, and is stored therein, and on the contrary, lithium ions return to the cathode from the anode at the time of discharging. Since lithium ion batteries have features such as a high energy density and a long life, they are widely used as power supplies for electric appliances such as video cameras, laptop computers, portable electronic equipment such as mobile telephones, electric tools such as power tools, and the like. Recently, lithium ion batteries are applied even to large-sized batteries that are mounted in electric vehicles (EV's), hybrid electric vehicles (HEV's) and the like.

Lithium ion batteries of this kind are configured to include a cathode, an anode, and an ion conducting layer that is interposed between these two electrodes, in which a separator that is formed from a porous film of polyethylene, polypropylene or the like and impregnated with a nonaqueous electrolyte solution, is generally used in the ion conducting layer.

However, since organic electrolyte solutions employing flammable organic solvents as the solvent are used as electrolytes as such, improvements in terms of structure and material for preventing volatilization or leakage, as well as improvements in terms of structure and material for the installation of safety devices that suppress temperature increases at the time of short circuit or for the prevention of short circuits, are needed.

In this regard, all-solid lithium ion batteries that use solid electrolytes which use lithium sulfide (Li₂S) or the like as a raw material, and are formed by making the batteries in an all-solid form, do not use flammable organic solvents in the batteries. Therefore, simplification of safety devices can be attempted, and the batteries can be made excellent in the production cost and productivity.

Lithium sulfide (Li₂S), which is suitable as a raw material for solid electrolytes, is not produced as a natural mineral product, and therefore, it is necessary to synthesize the compound.

Regarding the method for producing lithium sulfide of this kind, there are conventionally known, for example, 1) a method of heating and reducing lithium sulfate with an organic substance such as sucrose or starch in an inert gas atmosphere or in a vacuum; 2) a method of heating and reducing lithium sulfate with carbon black or powdered graphite in an inert gas atmosphere or in a vacuum; 3) a method of heating and decomposing lithium hydrogen sulfide ethanolate in a hydrogen gas stream; and 4) a method of causing lithium metal to directly react with hydrogen sulfide or sulfur vapor by heating under normal pressure or under pressure.

For example, Patent Document 1 suggests, as a new synthesis method for lithium sulfide, a method for producing lithium sulfide which includes synthesizing lithium sulfide by a reaction between lithium hydroxide and a gaseous sulfur source, characterized in that lithium hydroxide is processed into a powder having a particle diameter of from 0.1 mm to 1.5 mm, and the heating temperature at the time of reaction is set to from 130°C to 445°C.

Furthermore, Patent Document 2 suggests a method for producing lithium sulfide, characterized in that hydrogen sulfide gas is blown into a slurry containing lithium hydroxide and a hydrocarbon-based organic solvent, lithium hydroxide is allowed to react with hydrogen sulfide, the reaction is continued while removing water generated by the reaction from the slurry, and after the system is made substantially free of water, blowing of hydrogen sulfide is stopped while an inert gas is blown in.
Patent Document 1: Japanese Patent Application Laid-open No.H09-278423 A
Patent Document 2: Japanese Patent Application Laid-open No.2010-163356 A

### DISCLOSURE OF INVENTION

### PROBLEM TO BE SOLVED BY THE INVENTION

In a synthesis method based on a wet method using an organic solvent, not only a process for the removal of the organic solvent is required, but also a pressure container is needed, which lead to an increase in the size of the synthesis apparatus and an increase in production cost. From this point of view, if synthesis based on a dry method is used, the facility cost can be kept low.

However, in a dry method, in the case of using lithium hydroxide as a Li raw material as have been suggested hitherto, since lithium hydroxide is highly hygroscopic, lithium hydroxide is prone to aggregate so that handling thereof is difficult. Also, there is a problem that fine pulverization of lithium sulfide (Li₂S) thus obtainable is difficult to achieve.

Thus, the present invention is to suggest and manifest a new method for producing lithium sulfide (Li₂S), which is a method for producing lithium sulfide (Li₂S) by a dry method, in which lithium sulfide (Li₂S) can be produced more easily at lower cost and fine pulverization of lithium sulfide (Li₂S) can be attempted so that lithium sulfide can exhibit excellent performance as a solid electrolyte for lithium ion batteries.

### MEANS FOR SOLVING PROBLEM

The present invention suggests a method for producing lithium sulfide (Li₂S) for a solid electrolyte material for lithium ion batteries that is used as a solid electrolyte material of lithium ion batteries, the method including obtaining lithium sulfide powder by bringing lithium carbonate powder into contact with a gas containing sulfur (S) in a dry state, and at the same time, heating the lithium carbonate.

According to the production method suggested by the present invention, since lithium sulfide (Li₂S) can be produced in a dry state, production can be achieved more easily at lower cost. Furthermore, since lithium carbonate as a Li raw material has neither ignitability nor hygroscopic properties, handling of lithium carbonate is easy. Also, since lithium sulfide (Li₂S) thus obtainable can be micronized by micronizing lithium carbonate powder, reactivity as a solid electrolyte for lithium ion batteries can be further increased.

### BEST MODE(S) FOR CARRYING OUT THE INVENTION

Hereinafter, exemplary embodiments of the present invention will be described in detail, but the scope of the present invention is not intended to be limited to the exemplary embodiments to be described below.

### <Production method for lithium sulfide>

The method for producing lithium sulfide (Li₂S) according to the present exemplary embodiment (hereinafter, referred to as "the present production method for lithium sulfide") is a method for obtaining lithium sulfide powder by bringing lithium carbonate powder into contact with a gas containing sulfur (S) (referred to as "S-containing gas") in a dry state, and at the same time, heating the lithium carbonate.

### (Raw materials)

Lithium carbonate powder has advantageous features as compared with other lithium salt powders, such as that lithium carbonate powder does not have hygroscopic properties such as those of lithium hydroxide or the like, and the particle size can be regulated, so that particularly the particle size can be made small.

In order to allow efficient reaction between lithium carbonate and an S-containing gas, it is preferable to micronize the particle size of lithium carbonate powder in the form of powder. By regulating the particle size of lithium carbonate powder as a raw material, the particle size of lithium sulfide (Li₂S) thus obtainable can be regulated. In other words, micronization of lithium sulfide (Li₂S) thus obtainable can be attempted by micronizing lithium carbonate powder. For example, when the average particle size (D₅₀) of lithium carbonate powder is set to about 1 µm, the average particle size (D₅₀) of lithium sulfide thus obtainable can be adjusted to about 1.5 µm to about 3 µm.

As such, if micronization of lithium sulfide (Li₂S) can be attempted, reactivity of the solid electrolyte can be enhanced. Particularly by adjusting the average particle size (D₅₀) of lithium sulfide (Li₂S) to 20 µm or less, reactivity of lithium sulfide (Li₂S) can be enhanced.

In order to obtain finely particulate lithium sulfide having an average particle size (D₅₀) of 20 µm or less, lithium carbonate having an average particle size that is equivalent to 1/3 to 2/3 of the intended average particle size (D₅₀) of finely particulate lithium sulfide may be used, and more preferably, lithium carbonate having an average particle size (D₅₀) that is equivalent to 2/5 to 3/5 of the intended average particle size may be used. More specifically, for example, when lithium carbonate powder having an average particle size (D₅₀) of 8 µm to 12 µm is used, the average particle size (D₅₀) of lithium sulfide can be adjusted to 20 µm or less. When the average particle size (D₅₀) of lithium carbonate powder is set to 4 µm to 6 µm, the average particle size (D₅₀) of lithium sulfide can be adjusted to 10 µm or less. When the average particle size (D₅₀) of lithium carbonate powder is set to 0.8 µm to 1.2 µm, the average particle size (D₅₀) of lithium sulfide can be adjusted to 2 µm or less.

Examples of the S-containing gas include hydrogen sulfide gas (H₂S), carbon disulfide gas (CS₂), and sulfur gas obtained by vaporizing solid sulfur (S) by heating to a temperature equal to or higher than the boiling point.

Meanwhile, when lithium carbonate is decomposed, lithium oxide (Li₂O) is obtained. Thus, when lithium carbonate is caused to react with an S-containing gas, lithium oxide (Li₂O) is reduced by mixing lithium carbonate with a reducing gas such as hydrogen (H) or carbon (C) together with the S-containing gas. Therefore, high purity lithium sulfide that does not contain oxygen can be obtained. On the other hand, when hydrogen sulfide gas (H₂S) or carbon disulfide gas (CS₂) is used as the S-containing gas, since hydrogen (H) or carbon (C) is included as a gas component, it is even more preferable in order to produce high purity lithium sulfide that does not contain oxygen.

### (Contacting method)

The reaction between lithium carbonate and the S-containing gas is a dry reaction (solid-gas reaction). In other words, it is a method of bringing solid lithium carbonate into contact with a gas in a dry state and thereby causing lithium carbonate and the gas to react, without using a solvent such as water.

Regarding the reaction formula, when a H₂S-containing gas is used as the S-containing gas, the reaction formula is as follows:

Li₂CO₃ + H₂S → Li₂S + H₂O↑ + CO₂↑

Furthermore, the reaction formula in the case of using CS₂ gas as the S-containing gas is as follows:

Li₂CO₃ + 1/2CS₂ → Li₂S + 3/2CO₂↑

When the S-containing gas is supplied while lithium carbonate is heated, lithium carbonate is decomposed and reacts with the S-containing gas. In regard to this reaction, lithium carbonate powder is preferably heated to a temperature equal to or higher than the temperature at which lithium carbonate is decomposed, and to a temperature range at which lithium carbonate does not melt.

Lithium carbonate is usually decomposed at 700°C or higher; however, when the S-containing gas, particularly CS₂ or H₂S, is brought into contact with lithium carbonate, the decomposition reaction is accelerated, and thus the decomposition temperature is lowered. Accordingly, it can be contemplated that lithium carbonate is decomposed at a temperature equal to or higher than 500°C, and preferably equal to or higher than 600°C.

On the other hand, the melting point of lithium carbonate is 723°C, and lithium carbonate melts at a temperature equal to or higher than 800°C. Therefore, it is preferable to heat lithium carbonate powder to a temperature range of 500°C to 750°C, and particularly 600°C or higher, or 720°C or lower.

Regarding effective means for accelerating the reaction described above, examples include a method of making the particle size of lithium carbonate smaller and thereby increasing the surface area, or a method of abstracting reaction products, that is, H₂O or CO₂ in the above reaction formula, out of the system.

The reaction apparatus may be a continuous type, a batch type, or a fluid type.

The concentration of the S-containing gas supplied is preferably set to 10 vol% to 100 vol%. Meanwhile, when it is said that the concentration of the S-containing gas is 100 vol%, it means a gas composed only of the S-containing gas, that is, a pure gas. When the concentration is less than 100 vol%, it means a mixed gas of the S-containing gas with an inert gas such as Ar or nitrogen, or with a reducing gas such as hydrogen. When the concentration of the S-containing gas is 10 vol% or more, the contact reaction with lithium carbonate occurs sufficiently, lithium sulfide can be produced, and the presence of residual lithium carbonate can be prevented. Therefore, from such a viewpoint, the S-containing gas concentration is more preferably set to 10 vol% to 100 vol%, and even more preferably set to 50 vol% to 100 vol% in particular.

Meanwhile, since unreacted H₂S or CS₂ gas is a toxic gas, it is preferable to treat the exhaust gas by subjecting the exhaust gas to complete combustion with a burner or the like, and then neutralizing the combustion product with a sodium hydroxide solution to be disposed of as sodium sulfide or the like.

### <Use of lithium sulfide>

According to the production method for lithium sulfide, since lithium sulfide (Li₂S) can be produced by a dry method, production can be carried out more easily at lower cost. Furthermore, since lithium carbonate as a Li raw material has neither ignitability nor hygroscopic properties, handling thereof is easy. Also, the particle size of lithium sulfide (Li₂S) thus obtainable can be regulated by regulating the particle size of lithium carbonate powder. Particularly, since lithium sulfide (Li₂S) can be micronized by micronizing the particle size of lithium carbonate powder, highly reactive and finely particulate lithium sulfide (Li₂S) that has been micronized can be produced. When such finely particulate lithium sulfide (Li₂S) is used, preparation of a sulfide-based solid electrolyte for lithium ion batteries can be carried out more easily.

When lithium sulfide (Li₂S) is used as a sulfide-based solid electrolyte for lithium ion batteries, for example, lithium sulfide is allowed to react with diphosphorus pentasulfide (P₂S₅) or a sulfide other than that by mechanical milling, and thus, for example, a solid electrolyte such as Li₇P₃S₁₁ or Li₃PS₄ can be prepared. At this time, when micronized lithium sulfide (Li₂S) obtainable by the production method for lithium sulfide is used, the time for the reaction by mechanical milling can be shortened. Furthermore, since reactivity is high, an intended product phase can be produced at a low temperature.

Meanwhile, there are no particular limitations on the substance to react with lithium sulfide (Li₂S) in order to prepare a solid electrolyte. Examples of the substance include diphosphorus pentasulfide (P₂S₅), silicon sulfide (SiS₂), and germanium sulfide (GeS₂).

### <Explanation of terms>

The term "solid electrolyte" as used in the present invention means any material in which ions, for example, Li⁺, can move while the material is in a solid state.

When it is described as "X to Y" (X and Y represent arbitrary numbers) in the present invention, unless particularly stated otherwise, the expression includes the meaning of "X or above but Y or below", and also includes the meaning of "preferably more than X" or "preferably less than Y".

Furthermore, when it is described as "X or above" (X represents an arbitrary number) or "Y or less" (Y represents an arbitrary number), the expression includes the intention of meaning that "(the value) is preferably more than X" or "(the value) is preferably smaller than Y".

### EXAMPLES

Hereinafter, the present invention will be described by way of Examples. However, the present invention is not construed to be limited to these Examples.

### (Method for measuring particle sizes of lithium carbonate and lithium sulfide)

The particle size distributions of lithium carbonate and lithium sulfide were measured using FE-SEM images at magnifications of 500 times to 5,000 times, and using an image analysis type particle size distribution measurement software program (Mountech Co., Ltd., Mac-View, Ver. 4). The number of particles used to measure the particle size distribution is approximately 1,000, and the Heywood diameter (diameter of a circle with an equivalent projected area) obtained by analytic processing by the software program was employed. From the results of this analysis, the average particle size (D₅₀) and D₉₀ on a volume basis were determined.

### <Example 1>

2 g of lithium carbonate powder (D₅₀ = 4.1 µm, D₉₀ = 8.4 µm) was filled in an alumina boat, and the alumina boat was mounted in a tube-shaped furnace which could be gas-purged. The interior of the electric furnace was completely purged with a S-containing gas (H₂S gas, a concentration of 100 vol%), and then the electric furnace was heated to a temperature of 700°C and maintained for 4 hours. Thereafter, the electric furnace was naturally cooled, and a sample (L₂S) was taken out from the electric furnace.

### <Example 2>

2 g of lithium carbonate powder (D₅₀ = 0.9 µm, D₉₀ = 2.2 µm) that had been micronized by subjecting the lithium carbonate powder used in Example 1 to a pulverization treatment with a bead mill, was filled in an alumina boat, and the alumina boat was mounted in a tube-shaped furnace which could be gas-purged. The interior of the electric furnace was completely purged with a S-containing gas (H₂S gas, a concentration of 100 vol%), and then the electric furnace was heated to a temperature of 700°C and maintained for 4 hours. Thereafter, the electric furnace was naturally cooled, and a sample (L₂S) was taken out from the electric furnace.

### <Example 3>

A sample (L₂S) was obtained in the same manner as in Example 1, except that the temperature for heating and retention in the electric furnace was set to 480°C, which was lower than the decomposition temperature of lithium carbonate.

### <Example 4>

A sample (L₂S) was obtained in the same manner as in Example 1, except that the temperature for heating and retention in the electric furnace was set to 800°C, which was higher than the melting point of lithium carbonate.

### <Examples 5 to 7>

A sample (L₂S) was obtained in the same manner as in Example 1, except that the temperature for heating and retention in the electric furnace was set to the temperatures indicated in Table 1.

### <Example 8>

A sample (L₂S) was obtained in the same manner as in Example 2, except that the S-containing gas in the electric furnace was changed to a mixed gas of a S-containing gas (H2S gas) and an inert gas (Ar gas) (H₂S gas concentration: 90 vol%, Ar gas concentration: 10 vol%).

### <Example 9>

A sample (L₂S) was obtained in the same manner as in Example 2, except that the S-containing gas in the electric furnace was changed to a mixed gas of a S-containing gas (H₂S gas) and a reducing gas (H₂ gas) (H₂S gas concentration: 90 vol%, H₂ gas concentration: 10 vol%).

For the samples obtained in Examples 1 to 9, the product phase was measured by an X-ray diffraction method, and the Li/S molar ratio and the purity were measured by an ICP emission analysis method, while the carbon concentration was measured by a combustion-infrared absorption method. The results are listed in Table 1.

**[Table 1]**

| Example | Production conditions | Lithium sulfide | | | | | |
|---|---|---|---|---|---|---|---|
| | Heating temperature [°C] | Product phase (XRD) | Li/S molar ratio | Purity [%] | Carbon concentration [ppm] | Particle size [µm] | |
| | | | | | | D50 | D90 |
| Example 1 | 700 | Li₂S (single phase) | 2.00 | 99.2 | 980 | 8.3 | 14.1 |
| Example 2 | 700 | Li₂S (single phase) | 2.01 | 99.4 | 720 | 1.8 | 2.6 |
| Example 3 | 480 | Li₂S + Li₂CO₃ | 2.15 | 96.2 | 8400 | 5.2 | 9.7 |
| Example 4 | 800 | Li₂S (single phase) | 1.98 | 99.6 | 720 | 20. 3 | 53.2 |
| Example 5 | 540 | Li₂S (single phase) | 2.08 | 97.9 | 2600 | 5.8 | 10.4 |
| Example 6 | 610 | Li₂S (single phase) | 2.05 | 98.4 | 1530 | 6.4 | 11.8 |
| Example 7 | 720 | Li₂S (single phase) | 2.00 | 99.5 | 910 | 9.3 | 16.4 |
| Example 8 | 700 | Li₂S (single phase) | 1.99 | 99.5 | 735 | 1.9 | 2.8 |
| Example 9 | 700 | Li₂S (single phase) | 2.03 | 99.4 | 710 | 1.8 | 2.5 |

Regarding the product phase of the lithium sulfide powders thus obtained, in Examples 1, 2 and 4 to 9, only the peaks attributable to lithium sulfide (Li₂S) were confirmed, and thus it was found that a single phase of lithium sulfide was formed. On the other hand, in Example 3, the peaks for unreacted lithium carbonate were also confirmed in addition to the peaks of lithium sulfide.

Furthermore, regarding the Li/S molar ratio of lithium sulfide thus obtained, it was found that in Examples 1, 2 and 4 to 9, nearly stoichiometric compositions were achieved. Furthermore, in regard to purity, it was confirmed that the purity was 99% or higher in Examples 1, 2, 4, 7, 8 and 9. Furthermore, in these Examples, the carbon concentration representing the amount of unreacted lithium carbonate was less than 1,500 ppm, and it was confirmed that there was almost no residual carbon.

On the other hand, in Example 3, a Li-excess composition was employed, and it was confirmed that the reaction with hydrogen sulfide was yet incomplete. Furthermore, the carbon concentration was 8,400 ppm which was also very high, and as shown by the results of the X-ray diffraction measurement, it was confirmed that there was a large amount of unreacted lithium carbonate remaining therein.

Furthermore, regarding the particle size of lithium sulfide thus obtained, it was found that when the particle size of lithium carbonate that served as a raw material was regulated as in the case of Examples 1 and 2, the particle size of lithium sulfide (Li₂S) thus obtained could be regulated. Specifically, it was found that when the average particle size (D₅₀) of lithium carbonate powder was set to 5 µm or less, the average particle size (D₅₀) of lithium sulfide could be regulated to 10 µm or less; and when the average particle size (D₅₀) of lithium carbonate powder was micronized to 1 µm or less, the average particle size (D₅₀) of lithium sulfide could be micronized to 2 µm or less. However, when the lithium carbonate powder is heated to a temperature equal to or higher than the temperature at which lithium carbonate melts as in the case of Example 4, the particles of lithium sulfide thus obtained become coarse, and therefore, the particle size cannot be regulated. Accordingly, it was found that it is preferable to heat the lithium carbonate powder to a temperature range at which lithium carbonate does not melt.

From the results described above, it is preferable to heat lithium carbonate powder to a temperature equal to or higher than the temperature at which lithium carbonate is decomposed, and to a temperature range at which lithium carbonate does not melt. Specifically, it was found that it is desirable to heat the lithium carbonate powder to 500°C to 750°C, and particularly to a temperature range of 600°C or higher, or 720°C or lower.

### <Preparation of solid electrolyte>

1.63 g of the sample (Li₂S) obtained in Example 1 and 3.37 g of P₂S₅ (manufactured by Sigma-Aldrich Corp.) were introduced into a container made of zirconia having a capacity of about 80 ml, together with 90 g of zirconia balls of φ 5 mm, a vacuum grease was applied between the upper lid and the container, and the container was tightly sealed. At this time, the measurement and sealing operations were all carried out in a glove box which had been purged with sufficiently dried Ar gas (dew point: 60°C or higher).

X-ray diffraction measurement of this reaction product was carried out. As a result, in the samples that had been subjected to a mechanical milling treatment for 8 hours and 16 hours, peaks of the raw material lithium sulfide (Li₂S) were slightly observed; however, in the sample that had been treated for 24 hours, peaks for Li₂S or others were not confirmed, and it was confirmed that the sample thus obtained was in an amorphous state.

Furthermore, after the mechanical milling treatment for 24 hours, the reaction product was subjected to a heating treatment for one hour at 300°C in a glove box. X-ray diffraction measurement of the reaction product obtained after the heating treatment was carried out, and only the peaks attributable to Li₇P₃S₁₁ were confirmed.

Furthermore, the reaction product obtained after the heating treatment described above was subjected to uniaxial compression molding at a pressure of 200 MPa in a glove box to produce a pellet. A carbon paste was applied on the upper and lower surfaces of the pellet as electrodes, and then the pellet was subjected to a heat treatment for 30 minutes at 180°C. Thus, a sample for ion conductivity measurement was produced. The measurement of ion conductivity was carried out by an alternating current impedance method. As a result, the ion conductivity of the reaction product thus obtained was 9.8 × 10⁻⁴ S/cm at room temperature.

The sample (Li₂S) obtained in Example 2 was subjected to a mechanical milling treatment for 8 hours, 16 hours, or 24 hours as described above, and thus reaction products (whitish yellow powders) were obtained.

X-ray diffraction measurement for this reaction product was carried out. As a result, in the sample that had been subjected to a mechanical milling treatment for 8 hours, peaks for the raw material lithium sulfide (Li₂S) were slightly observed, but in the samples that had been treated for 16 hours and 24 hours, peaks for lithium sulfide (Li₂S) or others were not confirmed, and it was confirmed that the samples thus obtained were in an amorphous state.

Furthermore, the product obtained after the mechanical milling treatment for 16 hours was subjected to a heating treatment for one hour at 300°C as described above. In the X-ray diffraction measurement of the reaction product, only the peaks attributable to Li₇P₃S₁₁ were confirmed. Furthermore, the ion conductivity was 1.1 × 10⁻³ S/cm at room temperature.

From the above results, it was found that according to the method for producing lithium sulfide of the present invention, lithium sulfide (Li₂S) can be produced more easily at lower cost, and the particle size of lithium sulfide (Li₂S), which is a raw material, can be regulated so that excellent performance as a solid electrolyte for lithium ion batteries can be exhibited.

## Claims

1. A method for producing lithium sulfide (Li₂S) for a solid electrolyte material for lithium ion batteries that is used as a solid electrolyte material for lithium ion batteries, comprising bringing lithium carbonate powder into contact with a gas containing sulfur (S) in a dry state, simultaneously heating the lithium carbonate, and thereby obtaining lithium sulfide powder.

2. The method for producing lithium sulfide (Li₂S) according to claim 1, wherein the lithium carbonate powder is heated to a temperature equal to or higher than the temperature at which lithium carbonate is decomposed, and to a temperature range at which lithium carbonate does not melt.

3. A method for producing fine particulate lithium sulfide (Li₂S), comprising reducing the particle size of the lithium carbonate powder in the method for producing lithium sulfide (Li₂S) according to claim 1 or 2, and thereby reducing the particle size of the lithium sulfide powder thus obtainable.

4. A lithium sulfide for a solid electrolyte material for lithium ion batteries, wherein the lithium sulfide is produced by the method for producing lithium sulfide (Li₂S) according to any one of claims 1 to 3.

5. A solid electrolyte for lithium ion batteries, wherein the solid electrolyte is formed by using the lithium sulfide according to claim 4.

6. A lithium ion battery comprising the solid electrolyte according to claim 5.
